# EUROPÄISCHE PATENTSCHRIFT

(11) **EP 1 367 383 B1**
(45) Veröffentlichungstag und Bekanntmachung des Hinweises auf die Patenterteilung: **19.09.2007**
(21) Anmeldenummer: 02012155.4
(22) Anmeldetag: 01.06.2002
(51) Int. Cl.: G01N 21/35, G01J 3/457

(54) **Optischer Gasmelder**
Optical gas sensor
Détecteur de gaz

(43) Veröffentlichungstag der Anmeldung: 03.12.2003
(73) Patentinhaber: Siemens Schweiz AG, 8047 Zürich (CH)
(72) Erfinder: Forster, Martin, Dr., 8645 Jona (CH); Pleisch, Rolf, 8604 Volketswil (CH)
(74) Vertreter: Weise, Wolfgang

(56) Entgegenhaltungen:
- EP-A- 0 930 496
- WO-A-01/65219
- WO-A-01/94916
- DE-A- 4 018 393
- US-A- 6 006 585

## Beschreibung

Die vorliegende Erfindung betrifft einen optischen Gasmelder für den Nachweis von Substanzen, welche bei einer Wellenlänge von 11 ± 2 µm absorbieren, mit einer Lichtquelle, einer Messzelle mit einem Messfilter, einer Referenzzelle mit einem Referenzfilter, und mit einer Auswerteelektronik.

Die EP 0 930 496 Schrift beschreibt ein Verfahren zur Detektion eines Gases in einem überwachten Gebiet. Es wird eine Filteranordnung beschrieben, in welcher der Referenzfilter jene Strahlung blockiert, deren Wellenlänge im Gebiet der Absorptionswellenlänge der nachzuweisenden Substanz liegt.

Die WO 01/94916 A1 Schrift beschreibt ein Verfahren und eine Vorrichtung zur Bestimmung der Sicherheit eines Gasgemisches mit entflammbaren Komponenten wie Methan, Ethane, Hydrocarbonate etc. Dazu wird eine Infrarot-Spektroskopie des Gasgemisches in einer Gas-Zelle unter Verwendung eines Filters durchgeführt.

Die WO 01/65219 A1 Schrift beschreibt ein Spektrometer zur Bestimmung einer Konzentration einer Substanz. Dabei wird eine Lichtquelle für die zu messende Substanz benutzt. Ein Filter wird zum Filtern der Strahlung, die von der Substanz transmittiert wird, verwendet. Der Filter weist Durchlassbereiche für Wellenlängen auf, die den Absorptions-Peaks des Absorptionsspektrums der betreffenden Substanz entsprechen. Ein Detektor detektiert schliesslich die vom Filter gefilterte Strahlung.

Die DE 40 18 393 A1 Schrift offenbart eine Vorrichtung zur Messung der Gaskonzentrationen, die beim Gaswechsel von Pflanzen auftreten, die auf dem photoakustischen Gasanalyse-Verfahren beruht. Beidseitig eines symmetrischen Mikrophons sind Gasküvetten angeordnet, in die abwechslungsweise intensitätsmoduliertes, monochromatisches Licht zweier Infrarotstrahler eindringen kann. Entsprechend den optischen Filtern können die Gase CO2 und H2O gemessen werden.

Eine bekannte Substanz, die bei der genannten Wellenlänge absorbiert, ist Ammoniak (NH₃), eine Substanz, für deren Nachweis beispielsweise optoakustische Gasmelder sehr gut geeignet sind. In der EP-A-0 855 592 ist ein optoakustischer Gasmelder der eingangs genannten Art beschrieben, bei dem das Mess- und das Referenzfilter einen für das zu detektierende Gas charakteristischen gleichen Durchlassbereich aufweisen, der für den Nachweis von NH₃ bei etwa 10 um liegt. Der praktische Einsatz hat gezeigt, dass Alkohole und sonstige organische Lösungsmittel den Nachweis von Ammoniak stören können, weil diese Störgase im selben Wellenlängenbereich wie Ammoniak absorbieren.

Diese Störanfälligkeit ist nicht auf optoakustische Gasmelder beschränkt, sondern gilt allgemein für optische Gasmelder, die breitbandige Lichtquellen kombiniert mit Infrarot-Filtern oder schmalbandige Lichtquellen, wie LEDs, Laser, Laserdioden oder Quantenkaskadenlaser oder ähnliches verwenden. Die Messung kann dabei durch Absorption, Optoakustik oder ein sonsti-ges optisches Prinzip erfolgen.

Durch die Erfindung sollen nun die optischen Gasmelder der eingangs genannten Art so verbessert werden, dass ihre durch Alkohole und organische Lösungsmittel bedingte Fehlalarmrate deutlich reduziert wird.

Diese Aufgabe wird erfindungsgemäss dadurch gelöst, dass das Referenzfilter einen Durchlassbereich aufweist, welcher an ein mögliches Störgas angepasst ist, wobei der Durchlassbereich des Referenzfilters im Wellenlängenbereich von 7.2 µm bis 8.7 µm oder von 3.02 µm bis 4.0 µm liegt.

Eine erste bevorzugte Ausführungsform des erfindungsgemässen Gasmelders ist dadurch gekennzeichnet, dass das Messfilter einen Durchlassbereich von 11 ± 2 µm und das Referenzfilter einen vom Messfilter verschiedenen Durchlassbereich aufweist.

Eine zweite bevorzugte Ausführungsform des erfindungsgemässen Gasmelders ist dadurch gekennzeichnet, dass das Referenzfilter zwei Durchlassbereiche aufweist, von denen der eine im Wellenlängenbereich von 7.2 µm bis 8.7 µm und der andere im Wellenlängenbereich von 3.02 µm bis 4.0 µm liegt.

Eine dritte bevorzugte Ausführungsform des erfindungsgemässen Gasmelders ist dadurch gekennzeichnet, dass der Durchlassbereich des Referenzfilters so gewählt ist, dass bei gegebenem Wert der beiden Wellenlängen der halben maximalen Transmission des Messfilters die entsprechenden Werte des Referenzfilters so angepasst sind, dass die Signale, welche das Störgas in der Referenzzelle erzeugt, ähnlich oder gleich gross sind wie die Signale, welche das Störgas in der Messzelle erzeugt.

Eine vierte bevorzugte Ausführungsform des erfindungsgemässen Gasmelders ist dadurch gekennzeichnet, dass bei Vorhandensein mehrerer Störgase der Durchlassbereich des Referenzfilters so gewählt ist, dass bei gegebenem Wert der beiden Wellenlängen der halben maximalen Transmission und gegebenem Abstand zwischen diesen Wellenlängen des Messfilters die entsprechenden Werte des Referenzfilters so angepasst sind, dass die Signale, welche die Störgase in der Referenzzelle erzeugen ähnlich oder gleich gross sind wie die Signale, welche die Störgase in der Messzelle erzeugen.

Eine weitere bevorzugte Ausführungsform des erfindungsgemässen Gasmelders ist dadurch gekennzeichnet, dass eine Subtraktion der Signale der Referenzzelle von den Signalen der Messzelle erfolgt.

Im folgenden wird die Erfindung anhand eines Ausführungsbeispiels und der Zeichnungen näher erläutert; es zeigt:
- Fig. 1: eine Explosionsdarstellung eines erfindungsgemässen optoakustischen Gassensors,
- Fig. 2: einen schematischen Axialschnitt durch den Gassensor von Fig. 1; und
- Fig. 3: eine Transmissionskurve eines Filters des Gassensors von Fig. 1.

Die Erfindung wird nachfolgend in Zusammenhang mit einem optoakustischen Gassensor beschrieben, was aber nicht als einschränkend zu verstehen ist. Wie schon in der Beschreibungseinleitung erwähnt wurde, bezieht sich die Erfindung allgemein auf optische Gasmelder, die breitbandige Lichtquellen kombiniert mit Infrarot-Filtern oder schmalbandige Lichtquellen, wie LEDs, Laser, Laserdioden oder Quantenkaskadenlaser oder ähnliches verwenden. Die Messung kann dabei durch Absorption, Optoakustik oder ein sonstiges optisches Prinzip erfolgen.

Der dargestellte optoakustische Gassensor (siehe dazu auch EP-A-0 855 592) besteht aus zwei identischen, halbrunden Gehäusehälften 1 und 2 aus Aluminium-Spritzguss oder einem anderen geeigneten Material, aus einer Leiterplatte 3 und aus zwei Sicherungsringen 4 und 5. Jede der beiden Gehäusehälften 1 und 2, welche zusammengesetzt einen zylindrischen Sensorkörper bilden, enthält eine zylindrische Kammer, wobei die Kammer der einen Gehäusehälfte 1 als Messzelle 6 und die Kammer der anderen Gehäusehälfte 2 als Referenzzelle 7 dient, und eine der Mess- und der Referenzzelle 6 bzw. 7 vorgelagerte Kammer 8 bzw. 9 die zur Aufnahme einer der Mess- und der Referenzzelle 6 bzw. 7 gemeinsamen Lichtquelle 10 vorgesehen ist. Messzelle 6 und Referenzzelle 7 sind gegen die Lichtquelle 10 hin je durch ein optisches Messfilter 11 bzw. Referenzfilter 12 abgeschlossen. Die Lichtquelle 10 ist vorzugsweise so angeordnet, dass ihre Glühwendel auf der Verlängerung der Längsachsen der beiden zylindrischen Kammern, Messzelle 6 und Referenzzelle 7, liegt.

An ihrer Bodenfläche weisen die Mess- und die Referenzzelle 6 bzw. 7 je eine Bohrung zum Durchtritt eines Messmikrofons 13 bzw. eines Referenzmikrofons 14 auf. Die oberen Stirnflächen der beiden Gehäusehälften 1 und 2 weisen je eine bis zur Mess- bzw. Referenzzelle 6, 7 durchgehende Öffnung auf, in die je eine gaspermeable Membran 15 und im Anschluss an diese ein Lochgitter 16 eingesetzt sind. Die Membran 15, die für Gas durchlässig und für Wassertröpfchen undurchlässig ist, besteht aus einem engmaschigen Material mit Öffnungen in der Grössenordnung von Nanometern. Die Lochgitter 16 dienen als Träger für die Membranen 15 und verhindern ausserdem eine direkte Bestrahlung der Membranen durch die Lichtquelle 10. Messmikrofon 13, Referenzmikrofon 14 und Lichtquelle 10 sind auf der Leiterplatte 3 montiert, die ausserdem noch eine Fotodiode 17 zur Überwachung der Intensität des von der Lichtquelle 10 ausgesandten Lichts trägt.

Im Boden der Kammern 8 und 9 sind Bohrungen 18 und 19 zum Durchtritt der Lichtquelle 10 und der Fotodiode 17 vorgesehen, wobei die Bohrung 18 für die Lichtquelle 10 an der Trennfläche zwischen den beiden Gehäusehälften 1, 2 angeordnet ist, so dass die Lichtquelle 10 je zur Hälfte in einer der Gehäusehälften 1, 2 liegt. Die Bohrung 19 für die Fotodiode 17 ist darstellungsgemäss im Boden der Kammer 8 vorgesehen, sie könnte aber ebenso wie die Bohrung 18 je zur Hälfte in jeder Kammer liegen. In jedem Fall wird man, damit beide Gehäusehälften 1 und 2 identisch sind und für deren Herstellung nur eine Gussform erforderlich ist, auch die Kammer 9 mit dieser Bohrung versehen. Anstelle einer gemeinsamen Lichtquelle 10 für Mess- und Referenzzelle 6 und 7 kann auch für jede der beiden Zellen eine separate Lichtquelle vorgesehen sein.

Die beiden Gehäusehälften 1 und 2 sind an ihren planen Seitenflächen mit Bolzen und zugeordneten Löchern versehen, die zur Führung und Justierung dienen. Im betriebsbereiten Zustand des Sensors sind das Mess- und das Referenzfilter 11, 12 in die entsprechende Sensorhälfte 1 bzw. 2 eingeklebt, die Sensorhälften 1 und 2 sind an ihren planen Seitenflächen zusammengesteckt, mit den Ringen 4 und 5 fixiert und fest verbunden, vorzugsweise verklebt oder verleimt und die Leiterplatte 3 ist mit dem Sensorkörper vergossen. Die Mess- und die Referenzzelle 6 bzw. 7 und das Mess- und das Referenzmikrofon 13 bzw. 14 sind identisch.

Die Leiterplatte 3 ist mit einer nicht dargestellten weiteren Leiterplatte verbunden, die eine Treiber- und Auswerteelektronik enthält. Die Lichtquelle 10 ist eine Lampe mit einer Glühwendel oder eine Laserquelle. Die Fotodiode 17 besteht aus einer Siliziumzelle und einem Tageslichtfilter. Bei Verwendung einer Lampe mit Glühwendel als Lichtquelle 10, misst die Fotodiode 17 die Lichtintensität in einem Wellenlängenbereich um vorzugsweise 900 nm. Die Glühwendel emittiert Licht über einen breites Spektrum bis in den Infrarotbereich, und in den meisten Fällen wird für die Gasdetektion eine Spektrallinie im Infrarotbereich verwendet. Man geht jedoch davon aus, dass eine Kontrollmessung der Lichtintensität bei 900 nm für die Überwachung der Lichtintensität im Infrarotbereich genügend aussagekräftig und zuverlässig ist.

Die Treiberelektronik veranlasst die Lichtquelle 10, in einem Arbeitszyklus von 1:3 ein- und auszuschalten, wobei ein Schaltzyklus ungefähr 1/10 Sekunde dauert. Die Ausgangssignale des Messmikrofons 13 und des Referenzmikrofons 14 werden der Auswerteelektronik zugeleitet, wo eine Subtraktion der beiden Signale erfolgt. Das Ergebnis dieser Subtraktion wird verstärkt und durch phasenempfindliche Gleichrichtung in eine Gleichspannung umgewandelt. Die Ermittlung des Gaskonzentrationswerts erfolgt durch einen Vergleich des Spannungssignals mit gespeicherten Eichwerten, denen Gaskonzentrationswerte zugeordnet sind.

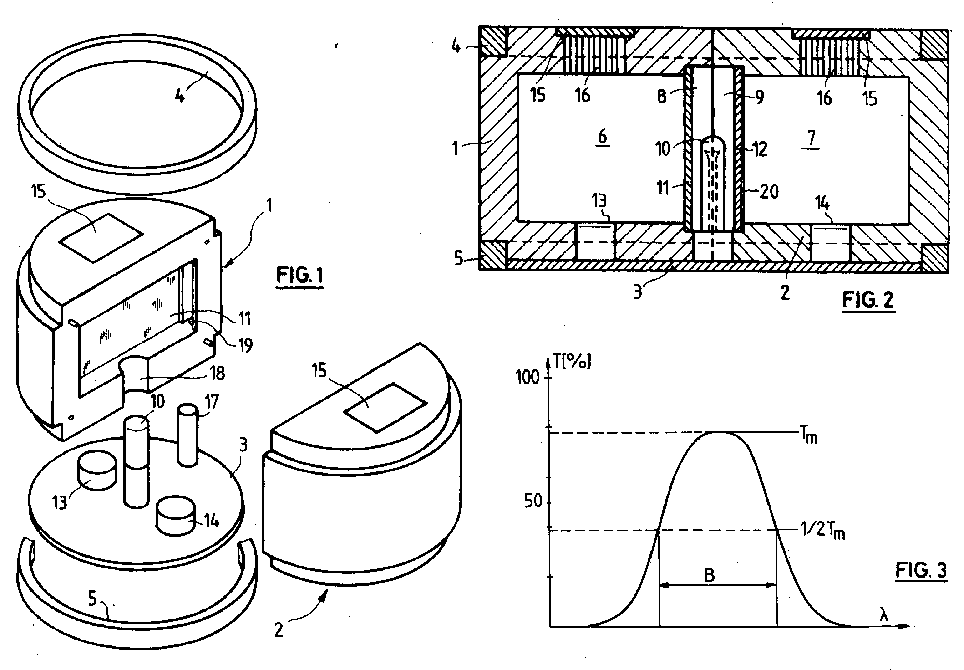

Das Mess- und das Referenzfilter 11 bzw. 12 wirken als optische Bandpassfilter mit je einem charakteristischen Durchlassbereich in Form eines schmalen Spektralbandes (Fig. 3). Beim Messfilter 11 liegt dieses Spektralband für den Nachweis von NH₃ bei 11± 2 µm. Da Alkohole und sonstige organische Lösungsmittel in diesem Wellenlängengebiet ebenfalls absorbieren, würde der Gasmelder bei Verwendung eines Referenzfilters 12 mit dem gleichen Durchlassbereich Fehlalarme erzeugen. Zur Vermeidung solcher Fehlalarme liegt der Durchlassbereich des Referenzfilters 12 entweder im Wellenlängengebiet von 7.2 µm bis 8.7 µm oder von 3.02 µm bis 4.0 µm oder in beiden genannten Wellenlängebieten. Zur Minimierung des Einflusses von Wasserdampf kann der Durchlassbereich des Referenzfilters 12 auf solche Wellenlängengebiete beschränkt werden, in denen Wasser nicht oder nur wenig absorbiert.

Fig. 3 zeigt eine typische Transmissionskurve des Mess- oder des Referenzfilters 11 bzw. 12, wobei auf der Abszisse die Wellenlänge λ und auf der Ordinate die Transmission T des Filters in Prozenten aufgetragen ist. Mit dem Bezugszeichen Tₘ ist die maximale Transmission des Filters bezeichnet, die im dargestellten Ausführungsbeispiel bei etwa 78% liegt. Die obigen Angaben zum Wellenlängengebiet entsprechen den Werten der Transmissionskurve bei der halben maximalen Transmission ½Tₘ. Mit dem Bezugszeichen B ist die so genannte Halbwertsbreite des Filters bezeichnet, das ist der Abstand zwischen den beiden Wellenlängen bei der halben maximalen Transmission ½Tₘ.

Bei gegebener Halbwertsbreite B und Lage eines der beiden Werte ½Tₘ des Messfilters 11 wird die Halbwertsbreite B und die Lage eines der beiden Werte ½Tₘ des Referenzfilters 12 so angepasst, dass die Signale, welche das Störgas in der Messzelle 6 erzeugt, ähnlich oder gleich gross sind wie die Signale, die das Störgas in der Referenzzelle 7 erzeugt. Werden nun die Signale der Referenzzelle 7 von denjenigen der Messzelle 6 subtrahiert, dann wird der Einfluss des Störgases auf das Ausgangssignal des Gasmelders minimiert oder sogar vollständig eliminiert. Bei Ausdehnung dieses Prinzips auf mehr als ein Störgas kann naturgemäss nur ein möglichst guter Kompromiss gefunden werden, der für bestimmte Störgase bessere und für andere schlechtere Resultate ergibt.

Im Betriebszustand des Gassensors wird das in der Messzelle 6 anwesende Gas durch moduliertes Licht der Lichtquelle 10 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht. Die gesuchte Konzentration wird durch Messung des akustischen Druckes ermittelt.

## Patentansprüche

1. Optischer Gasmelder für den Nachweis von Substanzen, welche bei einer Wellenlänge von 11 ± 2 µm absorbieren mit einer Messzelle (6) mit einem optischen Messfilter (11), einer Referenzzelle (7) mit einem optischen Referenzfilter (12), mit einer für die Mess- und die Referenzzelle (6, 7) gemeinsamen Lichtquelle (10) und mit einer Auswerteelektronik zum Auswerten von Signalen, die ein Störgas sowohl in der Messzelle (6) als auch in der Referenzzelle (7) erzeugt, **dadurch gekennzeichnet, dass** das optische Referenzfilter (12) einen Durchlassbereich für Absorptionswellenlängen eines möglichen Störgases aufweist, wobei der Durchlassbereich des Referenzfilters (12) im Wellenlängenbereich von 7.2 µm bis 8.7 µm oder von 3.02 µm bis 4.0 µm liegt.

2. Gasmelder nach Anspruch 1, **dadurch gekennzeichnet, dass** das Messfilter (11) einen Durchlassbereich von 11 ± 2 µm und das Referenzfilter (12) einen vom Messfilter (11) verschiedenen Durchlassbereich aufweist.

3. Gasmelder nach Anspruch 2, **dadurch gekennzeichnet, dass** das Referenzfilter (12) zwei Durchlassbereiche aufweist, von denen der eine im Wellenlängenbereich von 7.2 µm bis 8.7 µm und der andere im Wellenlängenbereich von von 3.02 µm bis 4.0 µm liegt.

4. Gasmelder nach Anspruch 1, **dadurch gekennzeichnet, dass** der Durchlassbereich des Referenzfilters (12) so gewählt ist, dass bei gegebenem Wert der beiden Wellenlängen bei der halben maximalen Transmission (½Tₘ) des Messfilters (11) die entsprechenden Werte des Referenzfilters (12) so angepasst sind, dass die Signale, welche das Störgas in der Referenzzelle (7) erzeugt, ähnlich oder gleich gross sind wie die Signale, welche das Störgas in der Messzelle (6) erzeugt.

5. Gasmelder nach Anspruch 1, **dadurch gekennzeichnet, dass** bei Vorhandensein mehrerer Störgase der Durchlassbereich des Referenzfilters (12) so gewählt ist, dass bei gegebenem Wert der beiden Wellenlängen bei der halben maximalen Transmission (½Tₘ) und gegebenem Abstand zwischen diesen Wellenlängen des Messfilters (11) die entsprechenden Werte des Referenzfilters (11) so angepasst sind, dass die Signale, welche die Störgase in der Referenzzelle (7) erzeugen ähnlich oder gleich gross sind wie die Signale, welche die Störgase in der Messzelle (6) erzeugen.

6. Gasmelder nach Anspruch 4 oder 5, **dadurch gekennzeichnet, dass** eine Subtraktion der Signale der Referenzzelle (7) von den Signalen der Messzelle (6) erfolgt.

## Claims

1. Optical gas sensor for detecting substances, which absorb at a wavelength of 11 ± 2 µm, with a measuring cell (6) with an optical measuring filter (11), a reference cell (7) with an optical reference filter (12), with a light source (10) common to the measuring and reference cells (6, 7) and with an electronic evaluation unit for evaluating signals generated by a disruptive gas both in the measuring cell (6) and in the reference cell (7), **characterised in that**
the optical reference filter (12) has a passage area for absorption wavelengths of a possible disruptive gas, with the passage area of the reference filter (12) being in the wavelength range from 7.2 µm to 8.7 µm or from 3.02 µm to 4.0 µm.

2. Gas sensor according to claim 1, **characterised in that** the measuring filter (11) has a passage area of 11 ± 2 µm and the reference filter (12) has a different passage area from that of the measuring filter (11).

3. Gas sensor according to claim 2, **characterised in that** the reference filter (12) has two passage areas, one of which is in the wavelength range from 7.2 µm to 8.7 µm and the other of which is in the wavelength range from 3.02 µm to 4.0 µm.

4. Gas sensor according to claim 1, **characterised in that** the passage area of the reference filter (12) is selected such that for a given value of the two wavelengths at half the maximum transmission (½Tₘ) of the measuring filter (11) the corresponding values of the reference filter (12) are tailored such that the signals generated by the disruptive gas in the reference cell (7) are similar or equal in size to the signals generated by the disruptive gas in the measuring cell (6).

5. Gas sensor according to claim 1, **characterised in that** where a number of disruptive gases are present, the passage area of the reference filter (12) is selected such that for a given value of the two wavelengths at half the maximum transmission (½Tₘ) and a given interval between said wavelengths of the measuring filter (11), the corresponding values of the reference filter (11) are tailored such that the signals generated by the disruptive gases in the reference cell (7) are similar or equal in size to the signals generated by the disruptive gases in the measuring cell (6).

6. Gas sensor according to claim 4 or 5, **characterised in that** the signals of the reference cell (7) are subtracted from the signals of the measuring cell (6).

## Revendications

1. Détecteur de gaz optique pour la mise en évidence de substances qui absorbent à une longueur d'onde voisine de 11 ± 2 µm, comprenant une cellule de mesure (6) pourvue d'un filtre de mesure optique (11), une cellule de référence (7) pourvue d'un filtre de référence optique (12), une source lumineuse (10) commune pour la cellule de mesure et la cellule de référence (6, 7) et un dispositif électronique d'analyse pour analyser des signaux produits par un gaz perturbateur non seulement dans la cellule de mesure (6) mais également dans la cellule de référence (7), **caractérisé en ce que** le filtre de référence optique (12) présente une bande passante pour des longueurs d'onde d'absorption d'un gaz perturbateur possible, la bande passante du filtre de référence (12) se situant dans la gamme de longueurs d'onde de 7,2 µm à 8,7 µm ou de 3,02 µm à 4,0 µm.

2. Détecteur de gaz selon la revendication 1, **caractérisé en ce que** le filtre de mesure (11) présente une bande passante de 11 ± 2 µm et le filtre de référence (12) présente une bande passante différente de celle du filtre de mesure (11).

3. Détecteur de gaz selon la revendication 2, **caractérisé en ce que** le filtre de référence (12) présente deux bandes passantes dont l'une se situe dans la gamme de longueurs d'onde de 7,2 µm à 8,7 µm et l'autre dans la gamme de longueurs d'onde de 3,02 µm à 4,0 µm.

4. Détecteur de gaz selon la revendication 1, **caractérisé en ce que** la bande passante du filtre de référence (12) est choisie de manière à ce que, pour une valeur donnée des deux longueurs d'onde pour la moitié de la transmission maximale (½Tₘ) du filtre de mesure (11), les valeurs correspondantes du filtre de référence (12) soient adaptées pour que les signaux produits par le gaz perturbateur dans la cellule de référence (7) soient similaires ou de grandeur égale aux signaux produits par le gaz perturbateur dans la cellule de mesure (6).

5. Détecteur de gaz selon la revendication 1, **caractérisé en ce que**, en présence de plusieurs gaz perturbateurs, la bande passante du filtre de référence (12) est choisie de manière à ce que, pour une valeur donnée des deux longueurs d'onde pour la moitié de la transmission maximale (½Tₘ) et une distance donnée entre ces longueurs d'onde du filtre de mesure (11), les valeurs correspondantes du filtre de référence (11) soient adaptées pour que les signaux produits par les gaz perturbateurs dans la cellule de référence (7) soient similaires ou de grandeur égale aux signaux produits par les gaz perturbateurs dans la cellule de mesure (6).

6. Détecteur de gaz selon la revendication 4 ou 5, **caractérisé en ce que** les signaux de la cellule de référence (7) sont soustraits aux signaux de la cellule de mesure (6).
